# EUROPEAN PATENT SPECIFICATION

(11) **EP 0 548 162 B1**
(45) Date of publication and mention of the grant of the patent: **19.12.2001**
(21) Application number: 91916186.9
(22) Date of filing: 10.09.1991
(51) Int. Cl.: H01B 1/06

(54) **FLAME RETARDANT CONDUCTIVE POLYMER COMPOSITION DEVICE**
FLAMMHEMMENDE LEITFÄHIGE POLYMERZUSAMMENSETZUNGVORRICHTUNG
DISPOSITIF COMPRENANT UNE COMPOSITION DE POLYMERE CONDUCTEUR RETARDANT LA COMBUSTION

(30) Priority: 10.09.1990 US 579757
(43) Date of publication of application: 30.06.1993
(73) Proprietor: TYCO Electronics Corporation, Menlo Park, CA 94025-1164 (US)
(72) Inventor: BATLIWALLA, Neville, S., Foster City, CA 94404 (US); LARKIN, Brian, S., Moss Geach, CA 94083 (US)
(74) Representative: Jay, Anthony William
(86) International application number: US9106533
(87) International publication number: WO9204718

(56) References cited:
- CH-A- 407 543
- GB-A- 1 560 759
- US-A- 4 800 253
- US-A- 4 822 983
- US-A- 4 849 133
- PATENT ABSTRACTS OF JAPAN vol. 8, no. 212 (C-244)(1649)

## Description

### BACKGROUND OF THE INVENTION

### Field of the Invention

This invention relates to self-regulating strip heaters which comprise a pair of elongate metal electrodes embedded in an elongate core of a conductive polymer composition which exhibits PTC behavior.

### Introduction to the Invention

Self-regulating strip heaters which comprise conductive polymer compositions are well known. A conductive polymer composition comprises a polymeric component and, dispersed or otherwise distributed therein, a particulate conductive filler. For most applications, such strip heaters comprise a resistive element composed of a conductive polymer having elongate electrodes embedded therein. Generally, the resistive element is surrounded by an insulating jacket to provide electrical insulation and environmental protection. In operation, these heaters can be wrapped around or attached to a substrate, e.g. a pipe or a tank, and provide a varying level of heat in response to changes in the thermal environment. Under normal operating conditions, this self-regulating feature serves to limit the maximum temperature which the heater achieves, thus providing safety and reliability. However, where the electrodes are exposed by external damage or by faulty installation, and when the heater is electrically powered and exposed to an electrolyte, in some circumstances an arc can occur between the electrodes. If the heater remains powered, the arc can under some circumstances "propagate", i.e. progress down the length of the strip, prolonging the burning.

Various solutions to this problem have been proposed, including the use of polymers which are themselves flame-retarded and the use of conductive polymer compositions which comprise flame-retardant additives, and the use of circuit protection devices which remove power from the circuit in the event of an arc. WO-A-9103822 discloses the use of a nonconductive filler such as Sb₂O₃ in conductive polymer compositions. WO-A-9117642 discloses the use of an additional insulating jacket over the resistive element in order to reduce the flammability of the heater.

US-A-4849133 discloses a PTC composition in which both an electrically conductive filler, e.g. carbon black, and a thermally conductive filler are dispersed in a polymer. The resulting composition has an improved ratio of high temperature resistance to room temperature resistance over conventional compositions which do not comprise a thermally conductive filler. As an optional additive, the composition may comprise flame retardants such as antimony-containing compounds or chlorinated compounds.

We have now discovered that when a conductive polymer composition comprises a mixture of a nonconductive filler and a flame retardant, it can be used to make a heater which can have a a reduced tendency to propagate arcs. In a first aspect, this invention related to a melt-extrudable conductive polymer composition which comprises
(1) a polymer,
(2) a particulate conductive filler,
(3) a particulate nonconductive filler, and
(4) a flame retardant,
said composition being such that when it is made into a standard strip heater as defined below and the heater is tested in a standard arc propagation test as defined below, an arc will not propagate.

In a second aspect, this invention relates to a heater which comprises
(1) a resistive element which is composed of a conductive polymer composition as defined in the first aspect, and
(2) two electrodes which can be connected to a source of electrical power to cause current to flow through the resistive element.

In a third aspect, this invention relates to a strip heater which, when tested in the standard arc propagation test, will not propagate an arc, and which comprises
(1) a polymer,
(2) a particulate conductive filler,
(3) a particulate nonconductive filler, and
(4) a flame retardant.

In a fourth aspect, this invention relates to a circuit comprising a heater as defined in the second or third aspect of the invention and a power supply.

### BRIEF DESCRIPTION OF THE DRAWING

Figure 1 is a cross-sectional view of a standard strip heater of the invention;
Figure 2 is a top view of a strip heater of the invention;
Figure 3 is a cross-sectional view of a strip heater along line 3-3 of Figure 2; and
Figure 4 is a circuit diagram of a circuit of the invention.

### DETAILED DESCRIPTION OF THE INVENTION

The conductive polymer composition used in this invention comprises a crystalline organic polymer. Suitable crystalline polymers include polymers of one or more olefins, particularly polyethylene; copolymers of at least one olefin and at least one monomer copolymerisable therewith such as ethylene/acrylic acid, ethylene/ethyl acrylate, and ethylene/vinyl acetate copolymers; melt-shapeable fluoropolymers such as polyvinylidene fluoride and copolymers of ethylene and tetrafluoroethylene and optionally one or more comonomers; polyesters; polyamides; and blends of two or more such crystalline polymers. Such compositions exhibit PTC (positive temperature coefficient of resistance) behavior. The term "PTC behavior" is used in this specification to denote a composition or an electrical device which has an R₁₄ value of at least 2.5 and/or an R₁₀₀ value of at least 10, and it is particularly preferred that the composition should have an R₃₀ value of at least 6, where R₁₄ is the ratio of the resistivities at the end and the beginning of a 14°C temperature range, R₁₀₀ is the ratio of the resistivities at the end and the beginning of a 100°C range, and R₃₀ is the ratio of the resistivities at the end and the beginning of a 30°C range. Suitable polymers and compositions comprising them may be found in U.S. Patent Nos. 4,188,276 (Lyons et al), 4,237,441 (van Konynenburg et al), 4,388,607 (Toy et al), 4,470,898 (Penneck et al), 4,514,620 (Cheng et al), 4,534,889 (van Konynenburg et al), 4,560,498 (Horsma et al), 4,591,700 (Sopory), 4,658,121 (Horsma et al), 4,774,024 (Deep et al), 4,775,778 (van Konynenburg et al), and 4,980,541 (Shafe et al); and European Patent publication Nos. 38,713, 38,718, 74,281, 197,759, and 231,068. Heaters comprising conductive polymer compositions are described in U.S. Patent Nos. 3,858,144 (Bedard et al), 3,861,029 (Smith-Johannsen et al), 4,017,715 (Whitney et al), 4,242,573 (Batliwalla), 4,246,468 (Horsma), 4,334,148 (Kampe), 4,334,351 (Sopory), 4,398,084 (Walty), 4,400,614 (Sopory), 4,425,497 (Leary), 4,426,339 (Kamath et al), 4,459,473 (Kamath), 4,547,659 (Leary), 4,582,983 (Midgley et al), 4,574,188 (Midgley et al), 4,659,913 (Midgley et al), 4,661,687 (Afkhampour et al), 4,673,801 (Leary), 4,689,475 (Matthiesen), 4,719,335 (Batliwalla et al), and 4,764,664 (Kamath et al); International Application Nos. PCT/US 90/01291, filed March 13, 1990 (WO 90/11001, published September 20, 1990), PCT/US 90/05102, filed September 10, 1990 (WO 91/03822, published March 21, 1991), and PCT/US 91/03123, filed May 7, 1991.

The composition also comprises a particulate conductive filler which is dispersed or otherwise distributed in the polymer. The particulate conductive filler may be, for example, carbon black, graphite, metal, metal oxide, particulate conductive polymer, or a combination of these. The particulate conductive filler is present in the composition in an amount suitable for achieving the resistivity needed for the desired application. For many applications, a particularly preferred particulate conductive filler is carbon black. If the composition is to be used in a strip heater, the carbon black normally comprises 5 to 50% by weight of the composition, preferably 10 to 40% by weight, particularly 15 to 30% by weight. Larger quantities of carbon black may be required for use in applications requiring lower resistivities, e.g. circuit protection devices.

The claimed composition comprises Sb₂O₃ as a particulate nonconductive filler.

The particulate nonconductive filler comprises a material which is electrically insulating and preferably has a resistivity of greater than 1 x 10⁹ ohm-cm. Preferably the nonconductive filler has a melting temperature of less than 1000°C. Suitable materials include metal oxides which are easily reduced, e.g. Sb₂O₃, Sb₂O₅, PbO₂, MoO₃, Bi₂O₃, and NaSbO₃. In this application, easily reduced means that the material has a reduction potential of less than +0.5 volts, preferably less than +0.4 volts, particularly less than +0.375 volts. For ease of dispersion in the polymer matrix, the filler is preferably in the form of particles which have a particle size of 0.01 to 50 µm, particularly 0.05 to 50 µm, especially 0.10 to 10µm. The nonconductive filler may be a single material or it may comprise two or more materials, e.g. a blend of metal oxides or a blend of a metal oxide and another particulate filler. The nonconductive filler comprises Sb₂O₃. Compositions which are particularly effective are those which comprise both carbon black and Sb₂O₃ and in which the quantity (y)/(x + y) is at least 0.01, preferably at least 0.02, particularly at least 0.05, especially at least 0.10, e.g. 0.20 to 0.50, where x is the percent by weight of the carbon black and y is the percent by weight of the Sb₂O₃, based on the weight of the total composition. For compositions in which the polymer comprises a mixture of medium density polyethylene and ethylene/ethyl acrylate, the Sb₂O₃ is present in an amount at least 5%, preferably at least 7%, particularly at least 8%, the percentages being by weight of the total composition.

The composition used in this invention also comprises a flame retardant which may be added to the composition in any suitable form, e.g. a particulate filler or a liquid. The flame retardant comprises a halogenated material, namely decabromodiphenyloxide (also known as decabromodiphenylether), referred to herein as DBDPO. The compositions comprise both DBDPO and Sb₂O₃, and are particularly effective if the quantity (y)/(y + z) is at least 0.10, preferably at least 0.15, particularly at least 0.20, e.g. 0.25 to 0.35, where z is the percent by weight of the DBDPO, based on the weight of the total composition.

The conductive polymer composition may also comprise inert fillers, antioxidants, chemical crosslinking agents, radiation crosslinking enhancement additives (prorads), stabilizers, dispersing agents, or other components. Mixing is preferably effected by melt-processing, e.g. melt-extrusion or processing in a Banbury or other internal mixer. Subsequent processing steps may include extrusion, molding, sintering, or another procedure in order to form and shape the composition. The composition may be crosslinked, e.g. by irradiation or chemical means.

The heater may be in the form of either a strip or a laminar sheet in which the resistive element comprises the composition of the invention. Strip heaters may be of any cross-section, e.g. rectangular, elliptical, or dumbbell ("dogbone"). Appropriate electrodes, suitable for connection to a source of electrical power, are selected depending on the shape of the electrical device. Electrodes may comprise elongate metal wires or braid, e.g. for attachment to or embedment in the conductive polymer, or they may comprise metal sheet, metal mesh, conductive (e.g. metal- or carbon-filled) paint, or other suitable materials.

Strip heaters of the invention are commonly used in a strip heater circuit which comprises the strip heater and a power supply. The power supply can be any suitable source of power, including portable power supplies and mains power sources. Other components such as resistors, thermostats, circuit protection devices, and indicating lights may also be present in the circuit. For example, the circuit may incorporate a fuse, for example a slow-blow fuse, e.g. a standard glass-encapsulated fuse such as that available from the Bussman Division of Cooper Industries under the name Bussman™ 312 and having a rating of 250 volts/10 amps. The fuse may be an independent component in the circuit or it may be in a fused plug assembly, i.e. an assembly in which the fuse is part of the plug which connects the strip heater to the power source, e.g. an outlet or a power supply. Examples of fused plugs of this type are found in U.S. Patent Nos. 5,002,501 (Tucker, issued March 26, 1991) and 5,004,432 (Tucker, issued April 2, 1991).

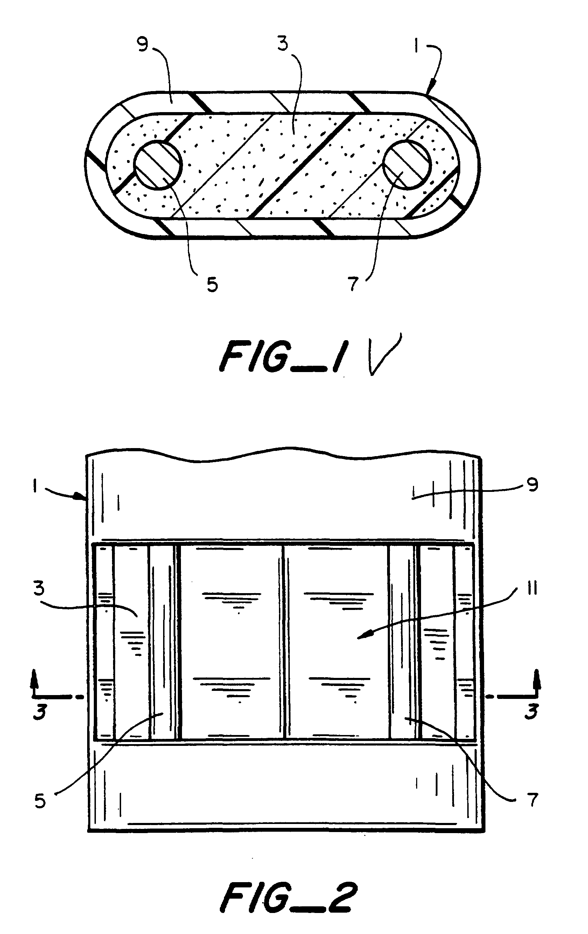

In this specification, a "standard strip heater" is defined for testing purposes. A "standard strip heater" is one in which a conductive polymer composition is melt-extruded around two 22 AWG stranded nickel/copper wires to produce a strip heater of flat, elliptical shape as shown in Figure 1. The standard heater has an electrode spacing of 0.10 inch (0.25 cm) from the center of one electrode to the center of the second electrode. The thickness of the standard heater at a point centered between the electrodes is 0.07 inch (0.18 cm). The standard heater is jacketed with a 0.030 inch (0.076 cm) thick layer of the flameretarded composition used for the jacket material in Example 1.

In this specification, an arc is defined to be "non-propagating" if, in a standard arc propagation test as described below, it extinguishes itself, i.e. puts itself out, in less than 20 seconds from the time of arc initiation, or if it propagates a distance of less than 0.25 inch (0.64 cm), preferably less than 0.125 inch (0.32 cm), beyond the arc initiation point. In the "standard arc propagation test", which is fully described in Example 1, a strip heater is connected in a circuit to a power supply and the behavior of any arc which is initiated is observed visually and electrically by means of a chart recorder connected across the circuit. Heaters are determined to be non-propagating either if no arc can be initiated despite multiple applications of electrolyte, or if the arc extinguishes itself in less than 20 seconds from the time of arc initiation. We have obtained similar results when the arc is initiated by an external flame rather than by an electrolyte.

While we do not wish to be bound to any particular theory to explain the operation of heaters of this invention, the experimental data are consistent with the following sequence. The Sb₂O₃ acts as a catalyst to oxidize the carbon black in the conductive polymer with the resulting evolution of CO₂ and the elimination of carbon tracking paths. Concurrently, the Sb₂O₃ is reduced to antimony metal which is conductive and creates a low resistance path through the polymer. In addition, the DBDPO acts synergistically with the Sb₂O₃ to extinguish any flame which may liberate more carbon and result in more carbon tracks.

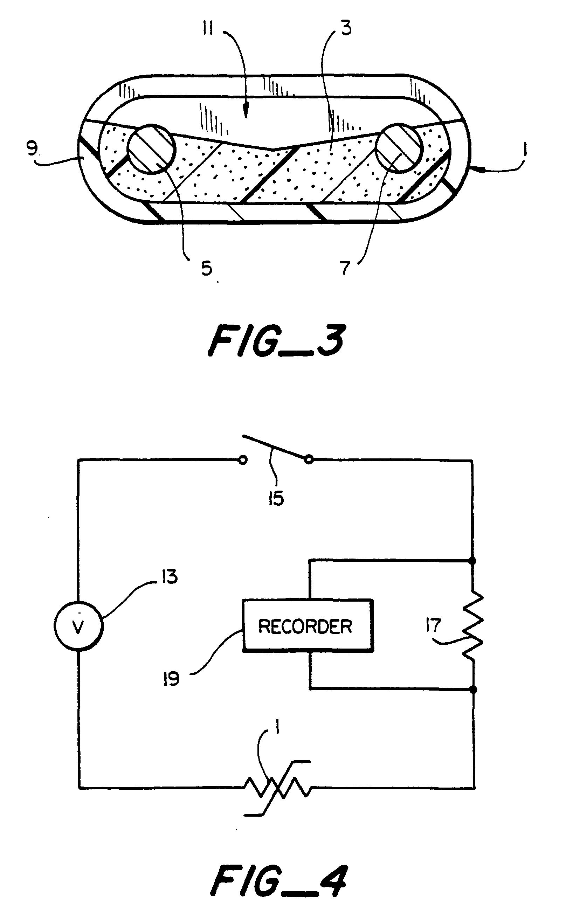

The invention is illustrated by the drawing in which Figure 1 shows a cross-section of a standard strip heater 1. Electrodes 5,7 are embedded in the conductive polymer composition 3 which provides the resistive element. A polymeric jacket 9 surrounds the heater core. Figure 2 shows a top view of strip heater 1 which has been prepared for the arc propagation test described below. A V-shaped notch 11 is cut through the polymeric jacket 9 and the conductive polymer composition 3 on one surface of the heater in order to expose electrodes 5 and 7. The cross-sectional view of the prepared heater along line 3-3 is shown in Figure 3. Electrodes 5,7 remain partially embedded in the conductive polymer 3.

Figure 4 shows a circuit of the invention which is equivalent to the Standard Arc Propagation test circuit defined below. A strip heater 1 is connected electrically in series with a power supply 13, a contact relay 15, and a shunt resistor 17. A chart recorder 19 is connected across the shunt resistor 17 and is used to measure the voltage drop when the contact relay 15 is closed and voltage flows through the circuit.

The invention is illustrated by the following examples.

### Example 1 (Comparative Example)

The ingredients listed as Composition A in Table I were preblended and then mixed in a co-rotating twin-screw extruder to form pellets. The pelletized composition was extruded through a 1.5 inch (3.8 cm) extruder around two 22 AWG stranded nickel-copper wires to produce a strip heater with a relatively flat elliptical cross-section. The heater had an electrode spacing of 0.106 inch (0.269 cm) from wire center to wire center, a thickness of 0.067 inch (0.170 cm) at a center point between the wires, and a total width of about 0.172 inch (0.437 cm). The heater was jacketed with a 0.030 inch (0.076 cm) layer of a composition containing 10% ethylene/vinyl acetate copolymer (EVA), 36.8% medium density polyethylene, 10.3% ethylene/propylene rubber, 23.4% decabromodiphenyloxide, 8.5% antimony oxide, 9.4% talc, 1.0% magnesium oxide, and 0.7% antioxidant, all percentages being by weight of the total composition.

The heater was tested using the Standard Arc Propagation Test described below. The results are shown in Table II. Also shown are the results of additional tests which were run for some samples which had a heater length (after stripping the conductive polymer from the end of the electrodes) of 100 feet (30.5 meters), or which were powered at voltages ranging from 60 to 120 volts. Similar information to that of the standard arc propagation test, e.g. distance of arc propagation, the number and intensity of current spikes, was recorded.

### Standard Arc Propagation Test

A standard, jacketed strip heater with a length of 25 inches (64 cm) was prepared by stripping one inch (2.5 cm) of jacket and conductive polymer material from a first end to expose the two electrodes. A transverse v-shaped notch was cut half-way through the thickness of the heater 2 inches (5.1 cm) from the second end and the jacket and conductive polymer were removed from the top half of the heater in order to expose part of each of the two electrodes. The electrodes at the first end were connected in a circuit in series with a 120V/100A power supply, a contactor relay, and a 0.1 ohm/100 watt shunt resistor. A chart recorder was connected across the shunt resistor in order to measure the voltage drop. When the relay was closed, the sample was powered at a voltage of 120 volts. A sufficient quantity of 10 to 20% saline solution was applied to the exposed v-notch to initiate an arcing fault. The chart recorder was monitored until the arc was extinguished. The distance of arc fault propagation on the strip heater, as well as the number and intensity of current spikes present during the arcing fault were measured.

### Example 2

Following the procedure of Example 1, the ingredients listed for Composition B in Table I were mixed, extruded, and jacketed to give a strip heater with the same dimensions as Example 1. Results of testing for arc propagation are shown in Table II.

### Example 3

Pellets of Composition A prepared following the procedure of Example 1 were pre-blended with a mixture of 26.9% by weight Sb₂O₃ and 73.1% by weight decabromodiphenyloxide (DBDPO) to give a blend with the same formulation as Composition C in Table I. The blend was mixed in a co-rotating twin-screw extruder to form pellets and was then extruded and jacketed to produce a heater with the same dimensions as that in Example 1. Results of testing are in Table II.

### Example 4

Sixty-eight pounds (30.9 kg) of pellets of Composition A prepared following the procedure of Example 1 were pre-blended with 32 pounds (14.5 kg) of the mixture of Sb₂O₃ and DBDPO described in Example 3 to give a blend with the same formulation as Composition D in Table I. The blend was mixed and extruded, and the heater was jacketed as in Example 3. Results of testing are in Table II.

### Examples 5 to 7 (Comparative Examples)

Pellets of Composition A prepared following the procedure of Example 1 were preblended with Sb₂O₃ to give blends with the formulations listed in Table I as Compositions E, F, and G, respectively. Heaters were prepared and tested as in Example 4.

### Example 8 (Comparative Example)

Pellets of Composition A prepared following the procedure of Example 1 were preblended with DBDPO to give the blend listed in Table I as Composition H. Heaters were prepared and tested as in Example 4.

### Example 9 (Comparative Example)

Pellets of Composition A prepared following the procedure of Example 1 were preblended with alumina trihydrate to give the blend listed in Table I as Composition I. Heaters were prepared and tested as in Example 4.

### Example 10

The composition of Example 2 (Composition B) was extruded through a 1.5 inch (3.8 cm) extruder around two 22 AWG stranded nickel-copper wires to produce a strip heater with a "dogbone" cross-section. The heater had an electrode spacing of 0.108 inch (0.274 cm) from wire center to wire center, a "web" thickness of approximately 0.040 inch (0.102 cm) at a center point between the wires, and a total width of about 0.154 inch (0.391 cm). The heater was jacketed as in Example 1. The results of testing are shown in Table II.

### Example 11

Using the composition of Example 4 (Composition D), a heater was prepared having the same geometry as Example 10. The results of testing are shown in Table II.

**TABLE I**

| Composition | | | | | | | | | |
|---|---|---|---|---|---|---|---|---|---|
| Component | A | B | C | D | E | F | G | H | I |
| EEA | 39.0 | 31.4 | 29.6 | 26.6 | 37.4 | 35.9 | 32.8 | 29.6 | 26.6 |
| CB | 22.0 | 17.6 | 16.7 | 14.9 | 21.1 | 20.2 | 18.5 | 16.7 | 14.9 |
| MDPE | 38.0 | 35.0 | 28.9 | 25.8 | 36.5 | 35.0 | 31.9 | 28.9 | 25.8 |
| AO | 1.0 | | 0.8 | 0.7 | 1.0 | 0.9 | 0.8 | 0.8 | 0.7 |
| Sb₂O₃ | | 4.3 | 6.5 | 8.6 | 4.0 | 8.0 | 16.0 | | |
| DBDPO | | 11.7 | 17.5 | 23.4 | | | | 24.0 | |
| ATH | | | | | | | | | 32.0 |
| y/(x + y) | 0 | 0.20 | 0.28 | 0.37 | 0.16 | 0.28 | 0.46 | 0 | 0 |
| Notes to TABLE I: EEA is ethylene/ethyl acrylate copolymer. CB is carbon black with a particle size of approximately 28 nm. MDPE is medium density polyethylene. AO is an antioxidant which is an oligomer of 4,4-thio bis(3-methyl 1-6-t-butyl phenol) with an average degree of polymerisation of 3 to 4, as described in U.S. Patent No. 3,986,981. Sb₂O₃ is antimony trioxide with a particle size of 1.0 to 1.8 µm. DBDPO is decabromodiphenyloxide (also known as decabromodiphenylether). ATH is alumina trihydrate (Al₂O₃·3H₂O) with a particle size of 0.15 µm. (y)/(x + y) is (weight % Sb₂O₃)/(Total weight % CB and Sb₂O₃). | | | | | | | | | |

**TABLE II**

| Example | % Sb₂O₃ | Strip | Sample Length (feet) | Applied Voltage (volts) | Arc Propagation | Flame Length (inch) | Current Spike Rate |
|---|---|---|---|---|---|---|---|
| 1 | 0 | Std.⁺ | 2 | 120 | Yes | 1 - 2 | Low |
| | | | 100 | 120 | Yes | 1 - 2 | |
| 2 | 4.3 | Std.⁺ | 2 | 120 | Yes | 1 - 2 | High |
| | | | 100 | 60 | No | | |
| | | | 100 | 70 | No* | | |
| | | | 100 | 80 | Yes | 3 | |
| | | | 100 | 90 | Yes | 2 | |
| | | | 100 | 100 | Yes | 2 | |
| | | | 100 | 120 | Yes | 2 | |
| 3 | 6.5 | Std.⁺ | 100 | 120 | Yes | | High |
| 4 | 8.6 | Std.⁺ | 2 | 120 | No | | High |
| | | | 100 | 60 | No | | High |
| | | | 100 | 70 | No | | High |
| | | | 100 | 80 | No | ** | High |
| | | | 100 | 90 | No | ** | High |
| | | | 100 | 100 | No | ** | High |
| | | | 100 | 120 | No | | High |
| 5 | 4.0 | Std.⁺ | 100 | 120 | Yes | | High |
| 6 | 8.0 | Std.⁺ | 100 | 120 | Yes | | High |
| 7 | 16.0 | Std.⁺ | 100 | 120 | Yes | | High |
| 8 | 0 | Std.⁺ | 100 | 120 | Yes | | Low |
| 9 | 0 | Std.⁺ | 100 | 120 | Yes | | Low |
| 10 | 4.3 | DB⁺ | 2 | 120 | No | | |
| | | | 75 | 120 | Yes | | |
| | | | 100 | 120 | Yes | | |
| 11 | 8.6 | DB⁺ | 2 | 120 | No | | |
| | | | 100 | 120 | No | | |

| | | | | | | | |
|---|---|---|---|---|---|---|---|
| Notes to TABLE II: * Will not sustain an arc | | | | | | | |
| ** Product sustained an arc for 6 to 16 seconds but there was no sustained flame. | | | | | | | |
| ⁺ Std. indicates "standard" oval geometry; DB indicates "dogbone" geometry. | | | | | | | |

## Claims

1. A strip heater which exhibits PTC behavior and which comprises
(1) a resistive element which is composed of a conductive polymer composition which consists essentially of (a) a crystalline organic polymer; (b) a particulate electrically conductive filler which comprises carbon black in an amount x percent by weight of the total composition; (c) a particulate filler which is electrically insulating and which comprises Sb₂O₃ in an amount y percent by weight of the total composition; and (d) a flame retardant which comprises decabromodiphenyloxide in an amount z percent by weight of the total composition,
(2) two electrodes in the form of elongate wires which are (a) embedded in the resistive element, and (b) can be connected to a source of electrical power to cause current to flow through the resistive element, and
(3) a polymeric jacket which surrounds the resistive element,
the heater being such that it will not propagate an arc when tested in the following Standard Arc Propagation Test:
(A) a standard, jacketed strip heater with a length of 25 inches (64 cm) is prepared by stripping one inch (2.5 cm) of jacket and conductive polymer material from a first end to expose the two electrodes; (B) a transverse v-shaped notch is cut half-way through the thickness of the heater 2 inches (5.1 cm) from the second end and the jacket and conductive polymer are removed from the top half of the heater in order to expose part of each of the two electrodes; (C) the electrodes at the first end are connected in a circuit in series with a 120V/100A power supply, a contactor relay, and a 0.1 ohm/100 watt shunt resistor and a chart recorder is connected across the shunt resistor in order to measure the voltage drop; (D) the relay is closed and the sample is powered at a voltage of 120 volts; (E) a sufficient quantity of 10 to 20% saline solution is applied to the exposed v-notch to initiate an arcing fault; (F) the chart recorder is monitored until the arc is extinguished; and (G) the distance of arc fault propagation on the strip heater, and the number and intensity of current spikes present during the arcing fault are measured.

2. A heater according to claim 1 wherein
(1) the polymer comprises ethylene/ethyl acrylate; and
(2) the quantity (y)/(x + y) is at least 0.20 and the quantity (y)/(y + z) is at least 0.20.

3. A heater according to claim 1 wherein the quantity (y)/(x + y) is at least 0.01.

4. A strip heater circuit which comprises
(1) a strip heater according to any one of the preceding claims; and
(2) a power supply.

## Patentansprüche

1. Heizband, das ein PTC-Verhalten besitzt und folgendes aufweist:
(1) ein Widerstandselement, das aus einer leitfähigen Polymerzusammensetzung gebildet ist, die im wesentlichen besteht aus (a) einem kristallinen organischen Polymer; (b) einem teilchenförmigen elektrisch leitfähigen Füllstoff, der Ruß in einer Menge von x Gewichtsprozent der Gesamtzusammensetzung aufweist; (c) einem teilchenförmigen Füllstoff, der elektrisch isolierend ist und Sb₂O₃ in einer Menge von y Gewichtsprozent der Gesamtzusammensetzung aufweist; und (d) einem Flammenhemmstoff, der Dekabromdiphenyloxid in einer Menge von z Gewichtsprozent der Gesamtzusammensetzung aufweist,
(2) zwei Elektroden in Form von länglichen Drähten, die
(a) in das Widerstandselement eingebettet sind, und
(b) mit einer Quelle für elektrische Energie verbindbar sind, um einen Stromfluß durch das Widerstandselement hindurch hervorzurufen, und
(3) einen polymeren Mantel, der das Widerstandselement umschließt,
wobei das Heizband derart ausgebildet ist, daß es bei einem Test desselben in einem nachfolgend genannten Standard-Lichtbogenausbreitungstest zu keinem Ausbreiten eines Lichtbogens in dem Heizband kommt:
(A) es wird ein standardmäßiges, ummanteltes Heizband mit einer Länge von 25 Inch (64 cm) vorbereitet, indem ein Inch (2,5 cm) des Mantels und des leitfähigen Polymermaterials von einem ersten Ende entfernt wird, um die beiden Elektroden freizulegen;
(B) es wird eine quer verlaufende V-förmige Nut in einem Abstand von 2 Inch (5,1 cm) von dem zweiten Ende bis auf die Hälfte der Dicke des Heizbandes eingebracht, und der Mantel und das leitfähige Polymer werden von der oberen Hälfte des Heizbandes entfernt, um jede der beiden Elektroden zu einem Teil freizulegen;
(C) die Elektroden werden an dem ersten Ende in einer Schaltung mit einer Stromversorgung von 120V/100A, einem Hilfsschütz-Relais und einem Nebenschluß-Widerstand von 0,1 Ohm/100 Watt in Reihe geschaltet, und es wird eine Registriereinrichtung über dem Nebenschluß-Widerstand angeschlossen, um den Spannungsabfall zu messen;
(D) das Relais wird geschlossen, und es wird eine Spannung von 120 V an das Teststück angelegt;
(E) es wird eine ausreichende Menge von 10 bis 20%iger Salzlösung auf die freiliegende V-Nut aufgebracht, um einen Lichtbogendefekt zu initiieren;
(F) die Registriereinrichtung wird bis zum Erlöschen des Lichtbogens überwacht; und
(G) es werden die Distanz der Ausbreitung des Lichtbogendefekts an dem Heizband sowie die Anzahl und die Intensität von während des Lichtbogendefekts auftretenden Stromspitzen gemessen.

2. Heizband nach Anspruch 1,
bei dem
(1) das Polymer Ethylen-/Ethylacrylat aufweist; und
(2) die Menge (y)/(x + y) mindestens 0,20 beträgt und die Menge (y)/(y + z) mindestens 0,20 beträgt.

3. Heizband nach Anspruch 1,
bei dem die Menge (y)/(x + y) mindestens 0,01 beträgt.

4. Heizbandschaltung, die folgendes aufweist:
(1) ein Heizband nach einem der vorausgehenden Ansprüche; und
(2) eine Stromversorgung.

## Revendications

1. Elément chauffant à bande qui présente un comportement CTP et qui comporte
(1) un élément résistif qui est composé d'une composition d'un polymère conducteur qui consiste essentiellement en (a) un polymère organique cristallin ; (b) une charge électriquement conductrice en particules qui comprend du noir de carbone en quantité de x pour cent en poids de la composition totale ; (c) une charge en particules qui est électriquement isolante et qui comprend du Sb₂O₃ en quantité de y pour cent en poids de la composition totale ; et (d) un retardateur de flamme qui comprend de l'oxyde de décabromodiphényle en quantité de z pour cent en poids de la composition totale,
(2) deux électrodes sous la forme de fils allongés qui (a) sont noyées dans l'élément résistif, et (b) peuvent être connectées à une source d'énergie électrique pour faire circuler un courant à travers l'élément résistif, et
(3) une enveloppe polymérique qui entoure l'élément résistif,
l'élément chauffant étant tel qu'il ne propage aucun arc lorsqu'il est essayé dans l'essai normalisé suivant de propagation d'arc :
(A) un élément chauffant à bande enveloppé, normalisé, d'une longueur de 25 inches (64 cm) est préparé en enlevant un inch (2,5 cm) d'enveloppe et de matière polymère conductrice d'une première extrémité pour mettre à découvert les deux électrodes ; (B) une entaille transversale en forme de v est réalisée par coupe sur la moitié de l'épaisseur de l'élément chauffant à 2 inches (5,1 cm) de la seconde extrémité et l'enveloppe et le polymère conducteur sont enlevés de la moitié supérieure de l'élément chauffant pour mettre à découvert une partie de chacune des deux électrodes ; (C) à la première extrémité, les électrodes sont connectées dans un circuit en série avec une alimentation en énergie de 120V/100A, un relais de contacteur et une résistance de dérivation de 0,1 ohm/100 watts et un enregistreur à bande est connecté aux bornes de la résistance de dérivation pour mesurer la chute de tension ; (D) le relais est fermé et l'échantillon est alimenté en énergie sous une tension de 120 volts ; (E) une solution saline de 10 à 20 % est appliquée en quantité suffisante sur l'entaille en v à découvert pour amorcer un arc de défaut ; (F) l'enregistreur à bande. est contrôlé jusqu'à ce que l'arc soit éteint ; et (G) la distance de propagation de l'arc de défaut sur l'élément chauffant à bande, et le nombre et l'intensité de pics de courant présents pendant l'arc de défaut sont mesurés.

2. Elément chauffant selon la revendication 1, dans lequel
(1) le polymère comprend un polymère éthylène/acrylate d'éthyle ; et
(2) la quantité (y)/(x + y) est d'au moins 0,20 et la quantité (y)/(y + z) est d'au moins 0,20.

3. Elément chauffant selon la revendication 1, dans lequel la quantité (y)/(x + y) est d'au moins 0,01.

4. Circuit d'élément chauffant à bande qui comporte
(1) un élément chauffant à bande selon l'une quelconque des revendications précédentes ; et
(2) une alimentation en énergie.
